# EUROPEAN PATENT APPLICATION

(11) **EP 2 420 419 A2**
(43) Date of publication of application: **22.02.2012**
(21) Application number: 11382252.2
(22) Date of filing: 22.07.2011
(51) Int. Cl.: B60T 7/10, B60T 13/74, B60T 7/08

(54) **Parking brake drive unit with locking device**

(30) Priority: 30.07.2010 ES 201031191
(71) Applicant: Batz, S.Coop., 48140 Igorre (ES)
(72) Inventor: Palacio Argüelles, Joseba, 48980 Santurtzi (ES); Revilla Mozas, Alexander, 48001 Bilbao (ES)
(74) Representative: Igartua, Ismael

(57) **Abstract**

Parking brake drive unit for vehicles, which comprises a main lever (3) assembled in a pivoting manner on a support (6); a pivoting catch member (5) on said main lever (3), including engagement means, preferably a claw (13), adapted to engage in a fixed, preferably geared sector (14); a button (7) assembled on the main lever (3) and connected to a rod (1), adapted to move said catch member (5) to disengage the claw (13) from the geared sector (14) when said button (7) is operated; a main spring disposed to push the claw (13) of the catch member (5) against said geared sector (14); and a locking device (4) that immobilises the rod (1) when said locking device (4) is not activated electrically.

## Description

### TECHNICAL FIELD

This invention relates to parking brakes for vehicles.

### PRIOR ART

The prior art contains known parking brake drive units that comprise a lever assembled in a pivoting manner on a support fixed to the chassis of the vehicle and disposed to be operated by causing its rotation in one or another direction to tighten a brake device. A catch member enables the rotation of the lever in a braking direction but prevents its rotation in an opposite direction, as a result of which the lever remains in the maximum tightening position reached. On the lever is disposed a button that may be operated manually to release the catch member and thereby loosen the tension of the brake device. Generally speaking, the catch member includes a catch lever assembled in a pivoting manner on the aforementioned main lever, and this catch lever has at least one claw adapted to engage in a geared sector fixed on the aforementioned support of the main lever. The button and the catch member are connected mechanically by means of a rod, and a spring is disposed to push the claw of the catch member against the geared sector.

European patent EP1650092 B1 discloses a parking brake drive unit of the type described above, in which the button is assembled on the main lever and connected to one end of a rod that has a second end adapted to push the catch member, which disengages the claw from the geared sector when said button is operated. The device includes a first spring or main spring similar to a conventional one to return the button to its extended position, and a second spring, or catch spring, disposed between a portion of the catch member and a portion of the rod to push one against the other and the claw against said geared sector of the support at the same time.

### DISCLOSURE OF THE INVENTION

It is an object of this invention to provide a parking brake drive unit, of the type that comprises a main lever assembled in a pivoting manner on a support and disposed to be operated to activate a brake device; a catch member assembled in a mobile manner on said main lever and which has at least one engagement means, preferably a claw, adapted to engage in a preferably geared sector fixed on said support; a main spring disposed to push the claw of the catch member against said geared sector; and a button assembled on the main lever and connected to a movable rod, adapted to move said catch member in a suitable direction to disengage the claw from the geared sector when said button is operated.

The unit of the invention comprises a locking device that immobilises the rod when said locking device is not activated electrically.

When the parking brake drive unit is activated, the main lever is rotated in relation to the fixed support and the brake device is tightened. In this situation if the locking device is activated electrically, the rod is not immobilised and the main lever may rotate, with it returning to its rest position, as when the button is pressed it acts on the rod, which is not immobilised, and this piece, which is adapted to move the catch member, releases it, disengaging the claw from the geared sector. The brake device may thus be loosened and the unit released.

If the locking device is not activated electrically, the rod is locked, with the result that when the button is pressed it cannot move and cannot act therefore on the catch member, and the unit is locked.

### DESCRIPTION OF THE DRAWINGS

Figure 1 shows a side view of a first embodiment of a parking brake drive unit of the invention in a situation in which the brake is activated and locked.
Figure 2 shows a side view of the unit of Figure 1 in a situation in which the brake is activated and unlocked.
Figure 3 shows a side view of the unit of Figure 1 in a situation in which the brake is unlocked.
Figure 4 shows a side view of a second embodiment of the parking brake drive unit of the invention in a situation in which the brake is unlocked.

### DETAILED DISCLOSURE OF THE INVENTION

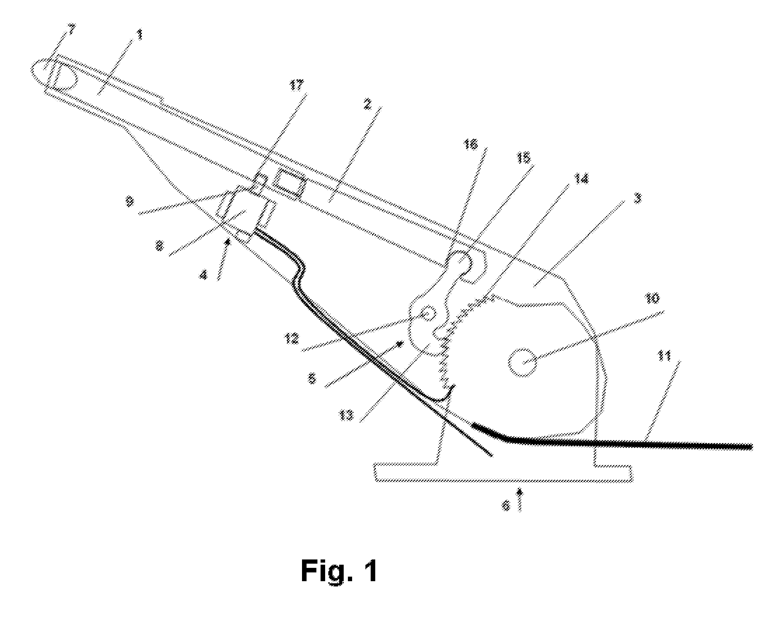

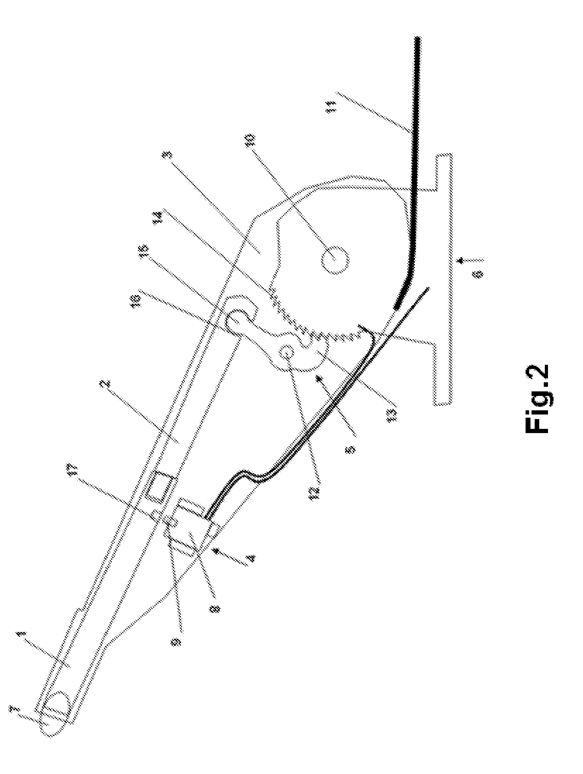

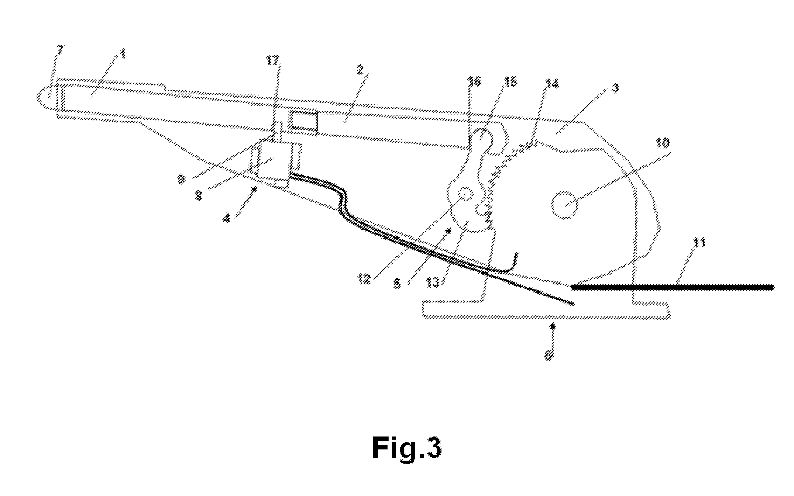

Figures 1 to 3 show a parking brake drive unit with locking device in accordance with an example embodiment. The unit comprises a main lever 3 assembled so that it may pivot in relation to an axis 10 on a support 6 fixed to the chassis of the vehicle. Said main lever 3 is disposed to be operated to activate a brake device 11. The tension of said device 11 increases as the free end of the main lever 3 is raised.

On the main lever 3 is assembled a catch member 5, which, in the example shown, has the form of a lever assembled to pivot in relation to an axis 12, but which may adopt other configurations, such as that of an appropriately guided sliding member. In this example, the aforementioned catch member 5 has a first arm on a first side of said axis 12, on which there are engagement means, a claw 13 in this case, while on a second arm on a second side of the axis 12 of the catch member 5, is found a support member 15.

In this example embodiment, on the free end of the main lever 3 there is a button 7 that may be assembled in a sliding manner and connected to a first end of a movable rod 1, although they may be components made up of a single piece. This rod 1 is disposed with a housing 17 that enables the housing of a moving shaft 9, and is connected in a sliding and coaxial manner to a second end by an auxiliary rod 2. This auxiliary rod 2 is disposed on a second end of a housing 16 that is adapted to make contact with the support member 15 of the catch member 5 and push it in a suitable direction to separate the aforementioned claw 13 from said geared sector 14 when the button 7 is operated. To return the button 7 to an extended position in relation to the main lever 3, after having been operated, there is a spring (not shown in the figures) that acts on the auxiliary rod 2 and, through its sliding connection with the rod 1, acts on the button 7. In addition, as the spring acts on the auxiliary rod 2, its housing 16 acts on the support member 15 of the catch member 5, which pushes the claw 13 against the geared sector 14.

On the main lever 3 is assembled a locking device 4 facing the rod 1, which in the example shown comprises an electric actuation system 8 (eg, an electromagnet) and a moving shaft 9. When the electric actuation system 8 receives an electrical signal, it is activated and the moving shaft 9 is withdrawn, and when it does not receive an electrical signal it is deactivated and the moving shaft 9 is extended and is housed in the housing 17 of the rod 1.

To activate the parking brake drive unit from the rest position, the handle of the main lever 3 is seized and moves upwards, it being rotated in relation to the fixed support 6 and the brake device 11 tightening. This operation may be performed whether an electrical signal reaches locking device 4 or not. If the signal arrives, the moving shaft 9 is withdrawn, and when the signal does not arrive the moving shaft 9 is extended and housed in the housing 17 of the rod, although during the movement of the main lever 3 there is nothing to prevent the pivoting of the catch member 5 on its axis 12, pulling the claw 13 on the geared sector 14.

To deactivate the parking brake drive unit, the handle of the main lever 3 is seized and the button 7 operated in order to release the catch member 5. In this situation, if the locking device 4 is activated electrically, the moving shaft 9 is withdrawn from the housing 17 of the rod 1 and the main lever 3 may rotate, returning it to its rest position, as when the button 7 is pressed it acts on the rod 1, which is not locked, and this in turn acts on the auxiliary rod 2, which is connected in a sliding manner to it. The auxiliary rod 2 thus acts on the catch member 5 and disengages the claw 13 from the geared sector 14. The brake device may thus be loosened and the unit released.

If the locking device 4 is not activated electrically, the moving shaft 9 is extended and housed transversally in the housing 17 of the rod 1. In this situation the rod 1 is locked, with the result that when the button 7 is pressed, said rod 1 cannot move and cannot therefore act on the auxiliary rod 2, as a consequence of which it does not allow the catch member 5 to be acted on and the claw 13 remains engaged in the geared sector 14. The unit is thus locked and its improper use is prevented. However, the main lever 3 may be rotated further upwards in relation to the rest position, and may therefore tighten the brake device 11 more, as the auxiliary rod 2, as it is sliding and coaxial to the rod 1, enables the catch element 5 to pivot in relation to its axis 12 and the claw 13 may be moved on the geared sector 14.

In other alternative example embodiments, the locking device 4 comprises a piezoelectric sensor, an electric motor or similar member, which when activated electrically converts the electrical signal into a mechanical movement, thereby moving the moving shaft 9.

In the example embodiment described in Figures 1 to 3, the rods are connected in a sliding and coaxial manner, with the result that the rod 1 is disposed with a housing on its end and the auxiliary rod 2 is disposed with a stud on its end that is housed in said housing. In an alternative embodiment, the rod 1 is disposed with a stud on its end that is housed in a housing disposed on the end of the auxiliary rod 2.

Similarly, in this embodiment the rods are rigid, these being capable of being metallic or plastic in alternative embodiments.

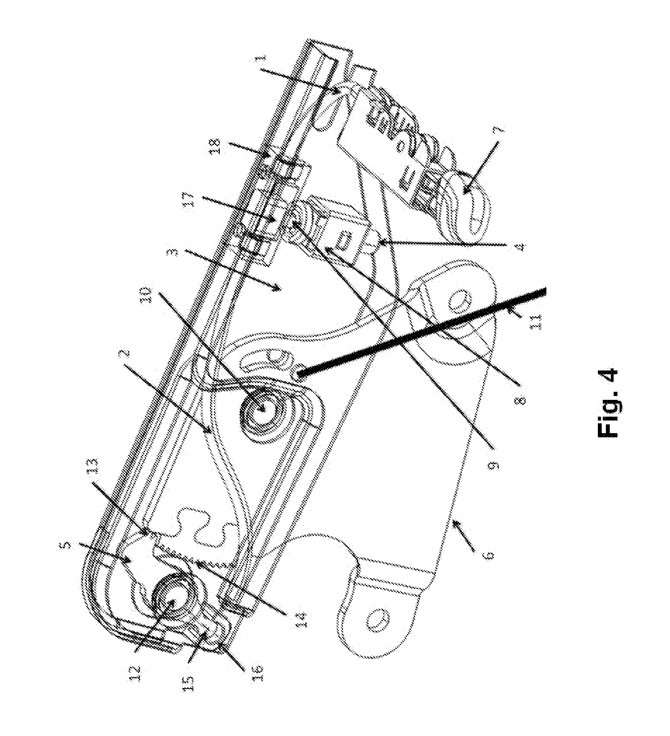

Figure 4 shows a parking brake drive unit with locking device in accordance with a second example embodiment. In this example embodiment, on the free end of the main lever 3 there is a button 7 connected to a movement inversion mechanism and connected to a first end of a flexible rod 1 (cable, rope or similar). This rod 1 has the other end housed in a connection device 18, which internally comprises a rigid member that enables the connection with the end of the rod 1 and also slides inside the connection device 18. This rigid member is disposed with a housing 17 that enables the housing of a moving shaft 9, and is connected at its other end to a first end of a flexible auxiliary rod 2. This auxiliary rod 2 is disposed on a second end of a housing 16 that is adapted to make contact with the support member 15 of the catch member 5, and drive it in a suitable direction to separate the claw 13 from said geared sector 14 when the button 7 is operated. When operated, and through the movement inversion mechanism, it causes a driving of the rod 1, which is transmitted through the connection device 18 to the auxiliary rod 2. At the same time this auxiliary rod 2 transmits this movement to the catch member 5 in a suitable direction to separate the claw 13 from said geared sector 14.

On the main lever 3 is assembled a locking device 4 facing the connection device 18. When the electric actuation system 8 receives an electrical signal, it is activated and the moving shaft 9 is withdrawn, and when it does not receive an electrical signal, it is deactivated and the moving shaft 9 is extended and is housed in the housing 17 of the rigid member, which slides inside the connection device 18.

This embodiment of the parking brake drive unit is activated and deactivated in the same manner as the first embodiment. When the parking brake drive unit is activated and the locking device 4 is not activated electrically, the moving shaft 9 is extended and housed in the housing 17 of the rigid member, which slides inside the connection device 18. In this situation the rod 1 is locked with the result that when the button 7 is pressed, said rod 1 cannot be moved and cannot therefore act on the auxiliary rod 2 as it is connected to the same rigid member, with the result that it does not allow the catch member 5 to be acted on and the claw 13 remains engaged in the geared sector 14. The unit is thus locked and its improper use is prevented. However, the main lever 3 may rotate further upwards in relation to the rest position and therefore tighten the brake device 11 more, as the auxiliary rod 2, as it is flexible, enables the catch member 5 to pivot in relation to its axis 12 and the claw 13 may be moved on the geared sector 14.

In any of the example embodiments, the incorporation of the locking device 4 ensures that the parking brake drive unit for vehicles is a system that remains secure against improper use when the unit is accessible. In the system proposed in this invention, the number of new components in relation to a standard brake unit is restricted to a locking device 4, comprised by an electric actuation system 8, a moving shaft 9, an auxiliary rod 2, a device for connecting the flexible rods 18 for the second embodiment and the electrical cables that enable the necessary electrical signal to be conducted. These are simple and inexpensive components and furthermore the electric actuation system 8 only acts when the electrical signal reaches it, and this is only required at the point the main lever 3 is deactivated. Furthermore, the moving shaft 9 moves in the embodiments described only in an axial direction in relation to the electric actuation system 8, as a result of which this may be a simple system.

## Claims

1. Parking brake drive unit for vehicles, of the type that comprises:
a main lever (3) assembled in a pivoting manner on a support (6) and disposed to be operated to activate a brake device (11);
a catch member (5) assembled in a mobile manner on said main lever (3) and which has at least one engagement means, preferably a claw (13), adapted to engage in a preferably geared sector (14) fixed on said support (6);
a main spring disposed to push the claw (13) of the catch member (5) against said geared sector (14); and
a button (7) assembled on the main lever (3) and connected to a movable rod (1) adapted to move said catch member (5) in a suitable direction to disengage the claw (13) from the geared sector (14) when said button (7) is operated;
**characterised in that** it comprises a locking device (4) that immobilises the rod (1) when said locking device (4) is not activated electrically.

2. Unit according to claim 1, wherein the locking device (4) comprises a moving shaft (9), which, in the locking position, immobilises the rod (1).

3. Unit according to claim 2, wherein the locking device (4) comprises an electromagnet (8), a piezoelectric sensor or an electric motor, which when activated electrically moves the moving shaft (9).

4. Unit according to claims 2 or 3, wherein it comprises an auxiliary rod (2), connected in a sliding manner to the rod (1), which acts on the catch member (5).

5. Unit according to claim 4, wherein the auxiliary rod (2) is adapted to push the catch member (5) in a suitable direction to disengage the claw (13) from the geared sector (14) when the button (7) is operated.

6. Unit according to claims 4 or 5, wherein the rod (1) and the auxiliary rod (2) are rigid.

7. Unit according to claim 6, wherein the moving shaft (9) is housed, in the locking position, in a housing (17) disposed in the rod (1).

8. Unit according to claims 6 or 7, wherein the auxiliary rod (2) is coaxial to the rod (1).

9. Unit according to claim 8, wherein the auxiliary rod (2) has an end housed in a housing located in one end of the rod (1).

10. Unit according to claim 8, wherein the rod (1) has an end housed in a housing situated in one end of the auxiliary rod (2).

11. Unit according to claims 4 or 5, wherein the rod (1) and the auxiliary rod (2) are flexible.

12. Unit according to claim 11, wherein the rod (1) and the auxiliary rod (2) are connected to the ends of a rigid member housed in a sliding manner in a connection device (18).

13. Unit according to claim 12, wherein the moving shaft (9) is housed, in the locking position, in a housing (17) disposed in the rigid member of the connection device (18).
